# EUROPEAN PATENT APPLICATION

(11) **EP 1 069 705 A1**
(43) Date of publication of application: **17.01.2001**
(21) Application number: 99440124.8
(22) Date of filing: 28.05.1999
(51) Int. Cl.: H04B 7/005, H04B 17/00, H04Q 7/34

(54) **CDMA communication system and transmitter unit for a CDMA communication system with transmitter power control in case of malfunction**

(71) Applicant: ALCATEL, 75008 Paris (FR)
(72) Inventor: Wilhelm, Michael, 71665 Vaihingen-Enz 3 (DE); Reemtsma, Jan-Hinnerk, 70825 Korntal-Münchingen (DE)
(74) Representative: Rausch, Gabriele, Dr.

(57) **Abstract**

A CDMA communication system is disclosed comprising at least one base station and at least one mobile station having means for controlling their transmitted powers, the mobile station including means for measuring its transmitted power as well as means for controlling its transmitted power in the event of a malfunction.

## Description

This invention relates to a CDMA communication system and to a transmitter for a CDMA communication system according to the generic parts of the respective independent claims.

In CDMA systems it is necessary to control the powers of the transmitters in order to optimize communications traffic and interconnect as many transceiver units as possible. In such a system, all units communicating with each other can transmit simultaneously. The signals are selected based on different codes. For a selected signal, the entirety of the other transmitter signals forms an interference signal. Meaningful detection of an individual transmitter based on its code is only possible if all transmitters transmit at defined powers. If a mobile station transmits at excessive power, the signals of all other stations will be blanketed, suppressed, and disturbed. The different output powers of the mobile stations depend on the distance from the mobile station to the base station. In the transmission channel, known attenuating effects, such as Doppler effects or Rayleigh fading, are caused. To adapt the transmitters to the varying conditions in the channel, the receiving base station attempts to optimize the output powers of the individual mobile stations using transmit power control (TPC) commands.

These control methods are known, for example, from A. Viterbi, "CDMA: Principles of Spread Spectrum Communication", Addison Wesley, 1998, pages 182 et seq., where open-loop and closed-loop power control mechanisms are described. These control loops describe the functions of the base station and the mobile units in an ideal situation. However, malfunctions may occur in the stations which may result in an excessive, uncontrollable power output of a transmitter unit. Also, problems in the transmission channel between base stations and mobile units may result in the TPC command being misunderstood and the power transmitted by the transmitter unit being raised to an unacceptable level. Such a malfunction will then interfere with the entire communication within a cell.

Japanese application JP 10303804 discloses a method of removing malfunctioning mobile units from the network. The method involves detecting the malfunction of a mobile station in a cell. The base station of this cell sends the identification number of the malfunctioning mobile station to a higher-order base station. In the latter, the identification number is stored in a failure list. If the mobile unit attempts to establish contact with the nearest base station, this communications link will be interrupted in response to a command from the higher-order base station. The malfunctioning mobile unit will be removed from the network by this base station.

Compared with this prior art, the CDMA communication system according to the invention has the advantage that any malfunction of a transmitter unit is detected directly in the transmitter, and that the transmitter is shut down via a control unit. This safety shutdown prevents a malfunctioning transmitter unit from interfering with the communication in an entire cell. The shutdown of the transmitter is based on an analysis of different data.

Advantageously, the safety circuit either disconnects the transmitter from its voltage supply or opens the feeder between the transmitter and the antenna. The shutdown is advantageously based on measurements made by a control unit which compares the measured values with a deviation from a desired value and initiates a disconnection on this basis.

One example of the invention will now be described in more detail with reference to the accompanying drawing, in which:
- Fig. 1: shows a base station and a mobile station of a prior-art CDMA system; and
- Fig. 2: shows one embodiment of a transmitter according to the invention.

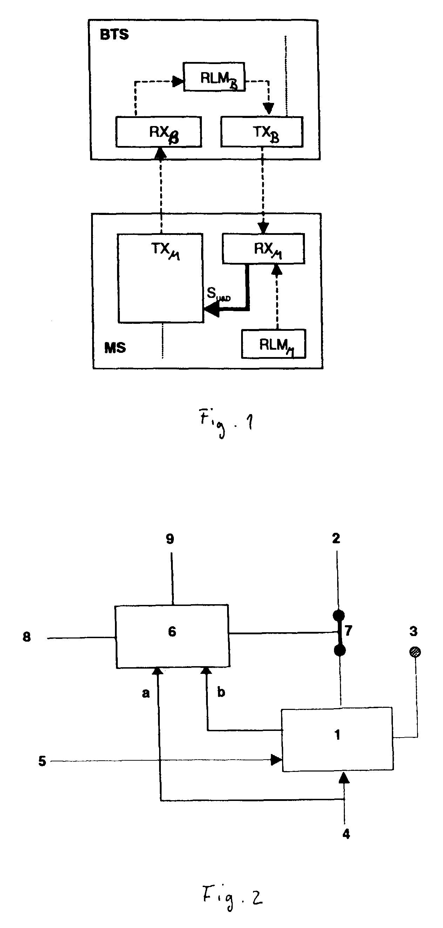

Fig. 1 shows a base station BTS which is linked with a mobile station MS via radio channels. A receiver RX_{B} in the base station receives the incoming signals and determines the signal-to-interference ratio (SIR). It compares the measured signal-to-interference ratio with a threshold value and generates TPC signals in order to adapt the powers transmitted by the mobile units to the requirements of the base station. In a radio link management RLM_{B}, these TPC commands are conditioned before being fed to a transmitter TX_{B}. The transmitter TX_{B} transmits the TPC signals to a receiver RX_{M} of the mobile station. A radio link management RLM_{M} in the mobile station specifies the step size for the control of the transmitted power. The receiver RX_{M} generates a signal S which controls a transmitter TX_{M} of the mobile station. The signal S serves to increase or decrease the power transmitted by the transmitter TX_{M}.

Fig. 2 illustrates the specific construction of a transmitter TX_{M}. The transmitter 1 is connected to a voltage supply 2 and an antenna 3. An input 4 is provided for signals which control the transmitted power with TPC commands. A further input 5 provides the connection to the data processing and receives the data to be transmitted. Over a control channel b, the transmitter 1 is connected to a control unit 6, which has a second control input a that receives the TPC commands 4. The control unit 6 may be connected to an external interface 8. It either incorporates a complete controller or is connected via an input/output 9 to a processor which monitors the power control. The control unit 6 is connected to a switch 7 inserted in the connection between transmitter 1 and voltage source 2. The control unit 6 analyzes the data arriving via channels a and b. Via channel a, any unreasonably high TPC value can be detected, so that the transmitter can be shut down. Via channel b, the power currently being transmitted is determined, so that any malfunction resulting in an extremely high transmitted power will be detected by the control unit and result in the transmitter being turned off. The control unit is capable of delivering information to the external interface 8 to notify the user of any power control problems. The switch 7 shown in this example can interrupt the voltage supply to the transmitter 1, but it is also possible to place the switch 7 ahead of the antenna and thus interrupt the transmission of excessive power. The switching element can also be a transistor.

In another embodiment, in the event of a malfunction, the transmitter unit is not completely shut down but is set by the control unit to a preset transmitted power. With such a reset signal, the transmitter unit remains in the network and can continue operating, even though under deteriorated conditions. If a malfunction should have occurred in the transmitter itself, and no transmit power control should be possible even after application of a reset signal, the control unit can disconnect the transmitter in the manner described above. This can be done after n reset attempts, for example.

## Claims

1. A CMDA communication system with at least one base station and at least one mobile station, said stations comprising means for controlling their transmitted powers, characterized in that the mobile station comprises means (6) for measuring the transmitted power of the transmitter (1) as well as means (6, 9) for analyzing and controlling the power of the transmitter (1) in the event of a malfunction of the transmitter.

2. A CDMA communication system as claimed in claim 1, characterized in that a control unit (6) is connected to the transmitter (1) via control channels (a, b) and a reset channel (c).

3. A CDMA communication system as claimed in claim 1, characterized in that a switch (7) disconnects the transmitter from its voltage supply.

4. A CDMA communication system as claimed in claim 1, characterized in that a switch (7) disconnects the antenna (3) from the transmitter (1).

5. A CDMA communication system as claimed in claims 2 and 3, characterized in that the switch (7) for interrupting the transmission of power is connected to the control unit (6).

6. A CDMA communication system as claimed in claim 5, characterized in that the control unit compares current information about the transmitted power with stored values, and initiates the interruption or triggers a reset signal if the current information differs from a desired value.

7. A CDMA transmitter unit comprising a transmitter (1), a voltage supply (2), and an antenna (3),
characterized in that the transmitter (1) is connected to a control unit (6) which controls a switch (7) to interrupt the voltage supply (2) or delivers a reset signal in the event of a malfunction.
